# EUROPÄISCHE PATENTANMELDUNG

(11) **EP 4 650 684 A1**
(43) Veröffentlichungstag der Anmeldung: **19.11.2025**
(21) Anmeldenummer: 25176094.8
(22) Anmeldetag: 13.05.2025
(51) Int. Cl.: F24H 9/13, F16L 37/248, F16L 41/12, F24H 9/14

(54) **HEIZGERÄT MIT EINER ROHRANSCHLUSSAUFNAHME**

(30) Priorität: 14.05.2024 DE 102024113363
(71) Anmelder: Vaillant GmbH, 42859 Remscheid NRW (DE)
(72) Erfinder: Schumacher, Nils, 42857 Remscheid (DE); Hauser, Stefanie, 42329 Wuppertak (DE); Schmerbeck, Ulf, 45525 Hattingen (DE); Balaj, Martin, 91321 Tren ianska Turná (SK); Kuhl, Uwe, 40699 Erkrath (DE)
(74) Vertreter: Popp, Carsten

(57) **Zusammenfassung**

Heizgerät (4) mit einem Rohrstutzen (2), einer Rohranschlussaufnahme (1), eingerichtet zur Aufnahme und Befestigung des Rohrstutzens (2), sowie einer Manschette (9), wobei die Manschette (9) drehbar auf dem Rohrstutzen (2) angeordnet und eingerichtet ist zur Ausbildung eines Bajonettverschlusses mit dem Heizgerät (4). Die Manschette (9) umfasst zwei zusammensetzbare Manschettenhälften (13), die miteinander eine verclipbare Verbindung ausbilden.

## Beschreibung

Die Erfindung betrifft ein Heizgerät mit einer Rohranschlussaufnahme. Das Heizgerät kann ein Gerät zum Aufheizen eines flüssigen Mediums sein. Insbesondere kann das Heizgerät dazu dienen, beispielsweise Wasser in einem Wasserkreislauf aufzuheizen, insbesondere eines Wasserkreislaufs einer Immobilie. Das Wasser kann dabei Brauchwasser oder ein Wärmeträgermedium sein.

Rohranschlussaufnahmen für Heizgeräte dienen dazu, dass Rohre bzw. Rohrstutzen darin befestigt werden können, z. B. um Wasser dem Heizgerät zuzuführen. Eine Rohranschlussaufnahme kann beispielsweise mit einem Wärmekreislauf in dem Heizgerät verbunden sein. Die Rohranschlussaufnahme dient dazu, dass der Rohrstutzen fest mit dem Heizgerät verbunden werden kann. Auch dient die Rohranschlussaufnahme dazu, dass der Rohrstutzen gegen diese abgedichtet werden kann, sodass im Übergang von Rohranschlussaufnahme des Heizgeräts zu dem Rohrende bzw. Rohrstutzen kein Wasser austreten kann.

Ein Heizgerät wird bevorzugt zu einem Aufbauort geliefert und dort installiert. Am Aufbauort wird das Heizgerät mit den dort vorliegenden Rohrstutzen verbunden, sodass ein Wasserzufluss und/oder ein Wasserabfluss möglich sind. Bei einem solchen Aufbau müssen demnach ggf. unterschiedliche Rohrstutzen mit unterschiedlichen Geometrien angeschlossen werden, sodass ein flexibler Einsatz des Heizgeräts ermöglicht ist. Zudem können die Rohrstutzen beispielsweise verschiedene Knicke, Kurven, Durchmesserveränderungen etc. im Anschlussbereich aufweisen. Dies gilt erst recht, wenn dieser Anschlussbereich bzw. diese Verbindung oder Verrohrung geräteintern erfolgt, also insbesondere, wenn dies im Bauraum eines von einem Heizungsgerätgehäuse abgegrenzten Bereich erfolgt. So kann das Gehäuse des Heizungsgerätes einen Zugang aufweisen, durch den sich das Rohr hindurch erstreckt und sich somit der Anschlussbereich im montierten Zustand hinter diesem Gehäuse befindet. Gerade in unmittelbarer Nachbarschaft zu den Armaturen und Komponenten des Heizungsgerätes herrscht eine stark eingeschränkte Bewegungsfreiheit zur Montage.

Eine Verbindung der Rohrstutzen mit oder in dem Heizgerät erfolgt für gewöhnlich mit Manschetten aus Metall. Diese Manschetten werden auf die Rohrstutzen aufgecrimpt, sodass sie nicht verrutschen können. Die Manschetten weisen zudem Möglichkeiten auf, mit denen sie an Aufnahmen in der Rohranschlussaufnahme befestigbar sind. Für gewöhnlich erfolgt eine solche Befestigung durch ein Verdrehen der Manschette, damit dessen Befestigungsmöglichkeiten in die Rohranschlussaufnahme eingeführt werden. Ein solches Verdrehen kann jedoch Probleme beim Aufbau des Heizgeräts darstellen. Aufgrund unterschiedlicher Geometrien der Rohrstutzen können diese häufig nicht einfach drehbar sein. Es besteht die Gefahr, dass bei einer Verdrehung solcher Rohrstutzen, Risse oder Defekte in den Rohrstutzen entstehen. Teilweise bieten Aufbauorte von Heizgeräten wenig freien Raum, sodass ein Erreichen der Rohranschlussaufnahme bei gleichzeitigem Verdrehen des Rohrstutzens teilweise schwierig bis unmöglich ist. Somit stellt sich die Problematik, dass ein Verdrehen des Rohrstutzens zum Einsetzen in die Rohranschlussaufnahme häufig nur mit großen Schwierigkeiten zu bewerkstelligen ist.

Die DE 198 60 075 A1 beschreibt eine Anordnung zum Verbinden zweier rohrförmiger Elemente, insbesondere von Enden zweier Rohre einer Klimaanlage. Es sind zwei ineinandergreifende Verschlussteile vorgesehen, die miteinander einen Bajonettverschluss ausbilden. Die Verschlussteile bestehen dabei aus mindestens zwei Teilelementen, die in radialer Richtung durch zwei ineinandergreifende Hülsen fixiert werden. Nachteilig ist eine Montage einer derartigen Verbindung aufwendig, da die Verschlussteile zusammengefügt und zudem mit den Hülsen fixiert werden müssen.

Hiervon ausgehend ist es Aufgabe der Erfindung, die mit Bezug auf den Stand der Technik geschilderten Probleme zumindest teilweise zu lösen. Insbesondere soll eine Möglichkeit geschaffen werden, mit der die Rohrstutzen in den Rohranschlussaufnahmen der Heizgeräte befestigbar sind, ohne dass der Rohrstutzen verdreht werden muss. Insbesondere soll dabei der Rohrstutzen fest in der Rohranschlussaufnahme haltbar sein und gleichzeitig eine abdichtende Funktion aufweisen.

Diese Aufgabe wird durch die Merkmale des unabhängigen Anspruchs gelöst. Weitere vorteilhafte Ausgestaltungen der Erfindung sind in den abhängigen Ansprüchen angegeben. Es ist darauf hinzuweisen, dass in den Ansprüchen einzeln aufgeführte Merkmale in beliebiger, technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindungen dargestellt werden.

Zur Lösung dieser Aufgabe trägt ein Heizgerät mit einem Rohrstutzen und einer Rohranschlussaufnahme bei, welche zur Aufnahme und Befestigung des Rohrstutzens eingerichtet ist. Weiter ist eine Manschette vorgesehen, die drehbar auf dem Rohrstutzen angeordnet und zur Ausbildung eines Bajonettverschlusses mit dem Heizgerät eingerichtet ist. Die Manschette umfasst zwei zusammensetzbare Manschettenhälften, die miteinander eine verclipbare Verbindung ausbilden.

Die Rohranschlussaufnahme ist dazu bestimmt und eingerichtet, einen (vorbestimmten bzw. dem Wasserkreislauf der Immobile zugeordneten) Rohrstutzen aufzunehmen bzw. Befestigungsmöglichkeiten für einen solchen Rohrstutzen darin bereitzustellen. Offensichtlich ist, dass die Rohranschlussaufnahme unterschiedliche Formen bzw. passende Größen für diesen Rohrstutzen aufweisen kann. Somit kann die Rohranschlussaufnahme je nach Anwendungsfall bzw. Größe des Rohrstutzens angepasst sein bzw. werden, insbesondere unter Beibehaltung der nachfolgend beschriebenen Funktionalität(en).

Das Heizgerät kann ein Gerät zum Aufheizen eines Wärmeträgermediums, insbesondere Wasser, sein. Bevorzugt ist das Heizgerät ein (elektrischer) Durchlauferhitzer oder ein Wärmetauscher, bei dem das Wärmeträgermedium aufgeheizt wird. Das Wärmeträgermedium kann genutzt werden, um in einem Wärmekreislauf wie beispielsweise einem Heizungskreislauf zirkuliert zu werden. Es ist auch möglich, dass das Wärmeträgermedium als Brauchwasser verwendet wird. So kann beispielsweise das Wärmeträgermedium, das in diesem Fall Brauchwasser ist, in dem Heizgerät aufgeheizt werden und in einem Wasserhahn ausfließen bzw. in einer Mischbatterie vor dem Ausfluss aus dem Wasserhahn mit kaltem Brauchwasser gemischt werden.

Die Rohranschlussaufnahme kann eine Aufnahme für einen Zufluss und/oder einen Abfluss des Wärmeträgermedium zum / vom Heizgerät darstellen. Bevorzugt werden Heizgeräte mit Zufluss und Abfluss bereitgestellt und können an einem Aufbauort mit Rohren des Heizungskreislaufs oder einer Brauchwasseranlage verbunden werden. Insbesondere kann das Heizgerät mit Rohrstutzen verbunden werden, also Enden von Rohren. Insbesondere sind die Rohrstutzen als Teile bzw. Abschnitte in Endbereichen von Rohren zu verstehen. Insbesondere schließen die Rohre mit den Rohrstutzen ab.

Die Aufnahme des Rohrstutzens ist bevorzugt so gestaltet, dass der Rohrstutzen mit der Rohranschlussaufnahme einen (kontinuierlichen) Strömungskanal bildet, durch den das Wärmeträgermedium hindurchfließen kann. Insbesondere ist die Aufnahme bevorzugt so gestaltet, dass der Strömungskanal abdichtend ist, also kein Wärmeträgermedium aus der Aufnahme des Rohrstutzens außerhalb des Strömungskanals austritt. Im Übergangsbereich von Rohrstutzen und Rohranschlussaufnahme können Dichtungsmittel vorgesehen sein, die zwischen diesen Komponenten wirken.

Die Rohranschlussaufnahme ist insbesondere geräteintern positioniert, also insbesondere im Bauraum eines von einem Heizungsgerätgehäuse abgegrenzten Bereich. Das Gehäuse des Heizungsgerätes kann eine Aussparung oder einen Durchgang aufweisen, durch den sich das Rohr bzw. der Rohrstutzen hindurch erstreckt. Die Rohranschlussaufnahme befindet sich im montierten Zustand insbesondere hinter diesem Gehäuse.

Die Befestigung des Rohrstutzens ist bevorzugt so gestaltet, dass der Rohrstutzen fest mit der Rohranschlussaufnahme verbunden ist. Insbesondere kann der Rohrstutzen so mit der Rohranschlussaufnahme befestigt sein, dass sich die Befestigung bei einem Durchströmen des Strömungskanals mit Wärmeträgermedium, also im normalen Betrieb des Heizgerätes, nicht löst. Bevorzugt ist die Befestigung so ausgestaltet, dass diese lösbar demontierbar ist. Bevorzugt ist die Befestigung von außen, also insbesondere außerhalb der Rohranschlussaufnahme bzw. sogar außerhalb des Heizgeräts, lösbar. Bevorzugt ist die Befestigung so gestaltet, dass sie zerstörungsfrei, widerstandsfrei und/oder ohne eine Verdrehung oder Veränderung der Position des Rohrstutzens lösbar ist.

Die Manschette kann eine Ummantelung bzw. ein um den Rohrstutzen herum ragendes Befestigungsmittel sein. Insbesondere kann die Manschette ein an dem Rohrstutzen anbringbares Befestigungsmittel sein, das wieder abnehmbar ist. Die Manschette kann so auf dem Rohrstutzen platzierbar sein, dass die Aufnahme und Befestigung erfolgen kann, indem die Manschette um den Rohrstutzen eingelegt wird und mit dem Rohrstutzen in die Rohranschlussaufnahme eingesetzt und darin befestigt wird. Der Rohrstutzen muss dabei bevorzugt nicht (axial) in die Manschette eingeführt werden. Es ist besonderes bevorzugt, dass die Manschette radial an dem Rohrstutzen anbringbar bzw. anordenbar ist.

Die Manschette kann einteilig oder (insbesondere in Umfangsrichtung) mehrteilig ausgeführt sein. Insbesondere können die Manschettenteile eine (dauer-)feste und manuell lösbare Verbindung miteinander aufweisen. Die Verbindung kann als elastisch verrastende Verbindung ausgeführt sein.

Die Anordnung der Manschette auf dem Rohrstutzen kann insbesondere (in Umfangsrichtung) drehbar und ggf. sogar auch (axial) bewegbar erfolgen. Insbesondere kann die Manschette so auf dem Rohrstutzen platziert werden, dass sie nach deren Anbringung (axial) entlang des Rohrstutzens (lose) geführt wird. Somit kann die Manschette um den Rohrstutzen herum drehbar sein. Auch kann die Manschette entlang des Rohrstutzens und geführt durch den Rohrstutzen bewegt bzw. verschoben werden. Diese Möglichkeit der Anbringung im Sinne einer (variablen) Vorplatzierung erlaubt insbesondere eine nachträgliche Ausrichtung der Manschette gegenüber der Rohranschlussaufnahme, wenn der Rohrstutzen dort aufgenommen bzw. eingeführt ist.

Insbesondere kann so ermöglicht werden, dass der Rohrstutzen in dem Rohranschlussbereich mit der Manschette befestigbar ist. Insbesondere kann dabei der Rohrstutzen in einer gewünschten Orientierung in den Rohranschlussbereich eingesetzt werden. Eine Befestigung des Rohrstutzens an/in der Rohranschlussaufnahme kann durch eine Verschiebung und/oder Verdrehung der Manschette auf dem Rohrstutzen erfolgen. Insbesondere kann die Manschette so eine Bewegung ausführen, die zur Ausbildung eines Bajonettverschlusses mit dem Heizgerät genutzt wird. Mit anderen Worten kann die Befestigung insbesondere erfolgen, indem die angeordnete Manschette auf dem Rohrstutzen in Richtung des Rohranschlussbereichs bewegt und dort verdreht wird.

Insbesondere umfasst der Bajonettverschluss eine Steckverbindung von Manschette und Heizgerät, die (nur) durch zwei Bewegungen der Manschette erfolgen kann. Eine erste Bewegung kann parallel zu einer Drehachse erfolgen und die zweite Bewegung kann in Umfangsrichtung zu der Drehachse erfolgen. Bevorzugt kann ein Bajonettverschluss eine verrutschsichere Verbindung zwischen Rohrstutzen und Rohranschlussaufnahme zueinander herstellen. Zum Lösen der Verbindung bedarf es dabei bevorzugt (auch) mindestens zweier Bewegungen. Bevorzugt ist der Bajonettverschluss ausgebildet mit mindestens einer Führung am Heizgerät bzw. dessen Rohranschlussaufnahme und mindestens einem geführten Bauteil an der Manschette. Die Führung kann dabei die Bewegungsrichtung vorgeben, der das geführte Bauteil folgen kann. Bevorzugt weist der Bajonettverschluss zudem mindestens eine Lösesicherungen auf. So können die Führung und/oder das geführte Bauteil Anschlag- oder Rastelement aufweisen, mit denen das geführte Bauteil bzw. die Führung in einer geschlossenen Position des Bajonettverschlusses gesichert ruhen können bzw. verankert sind. Auch ist möglich, dass Lösesicherungen federgespannt sind und/oder durch elastische Bauteile zusätzlich fixiert sind.

Vorliegend kann der Bajonettverschluss so ausgestaltet sein, dass die Manschette ein geführtes Bauteil ist bzw. hat und die Rohranschlussaufnahme mindestens eine Führung für die Manschette oder einen Teil davon aufweist. Bevorzugt weist die Manschette dabei mindestens eine Lösesicherung, mit der die Manschette relativ zur Rohranschlussaufnahme (axial) lagefixiert werden kann.

Dabei umfasst die Manschette zwei zusammensetzbare Manschettenhälften, die miteinander eine verclipbare Verbindung ausbilden. Die Manschette kann eine erste Manschettenhälfte und eine zweite Manschettenhälfte umfassen, die jeweils (in Umfangsrichtung) einen Flansch aufweisen können. Die Manschettenhälften können einzeln radial gegenüberliegend um den Rohrstutzen positioniert werden. Die Manschettenhälften sind so platzierbar, dass diese an den Flanschen aneinander anliegen und damit den Rohrstutzen vollständig umschließen. In dem Kontaktbereich der so platzierten Manschettenhälften, insbesondere im Bereich des Flansches, kann die Clip-Verbindung ausgeführt sein. Dazu kann jede Manschettenhälfte gegenüberliegend einen (ggf. beweglichen und/oder verformbaren) Clip-Haken und eine Clip-Öse aufweisen. Der Clip-Haken der einen Manschettenhälfte kann in die Clip-Öse der anderen Manschettenhälfte eingreifen. Insbesondere ist es damit möglich, die Manschette an einem Rohrstutzen anzubringen, der einen Endbereich vorweist, der einen größeren Außendurchmesser hat als der Rest des Rohrstutzens.

Es ist möglich, dass die verclipbare Verbindung lösbar gestaltet ist. Nach Nutzung des Rohrstutzens oder bei einem Austausch des Rohrstutzens ist es möglich, die Manschette abzunehmen und wiederzuverwenden.

Die Manschettenhälften können gleich ausgestaltet sein. Insbesondere weisen diese die gleichen Formelemente (Innenradius, Flansch, Clip-Elemente, etc.) auf. Es ist möglich, dass zwei gleiche Manschettenhälften mit einer einzigen Ausrichtung zueinander zu einer Manschette zusammengesetzt werden können. Eine solche Verwendung kann ermöglicht werden, wenn eine Manschettenhälfte verdreht bzw. spiegelverkehrt auf eine andere Manschettenhälfte gesetzt wird und die beiden Hälften miteinander verclipst werden.

Bevorzugt weist jede Manschettenhälfte zwei (radial gegenüberliegende, beabstandete) Verbindungsstege (insbesondere nach Art eines Flansches) auf, die radial von der Manschettenhälfte weg ragen. Ein erster Verbindungssteg weist eine Hakenaufnahme und der zweite Verbindungssteg mindestens zwei Rastnasen auf. Bevorzugt können die Manschettenhälften verdreht zueinander zusammengesetzt werden, indem die Rastnasen der zweiten Verbindungsstege in die Hakenaufnahmen der ersten Verbindungsstege eingeclipst werden. Der zweite Verbindungssteg kann entgegengesetzt hervorstehende Rastnasen aufweisen. Es ist möglich, dass mit zwei gegenläufigen Rastnasen eine feste Verbindung zwischen den beiden Manschettenhälften hergestellt wird. Es ist möglich, die Verbindung zwischen den Manschettenhälften zu lösen, wenn die Rastnasen manuell zurückgedrückt bzw. manipuliert werden.

Die Manschette kann in Umfangsrichtung verlaufende Führungsschienen aufweisen, die in Eingriff mit einem Führungsschacht an der Rohranschlussaufnahme zur Bildung eines Bajonettverschlusses bringbar sind. Die Führungsschienen können Teil einer (axial wirkenden) Arretiervorrichtung sein. Bevorzugt weist jede Manschettenhälfte eine teilweise umlaufende Führungsschiene auf, wobei diese im zusammengesetzten Zustand diametral gegenüberliegend positioniert sind. Die Führungsschienen können bei der zusammengesetzten Manschette auf einer gemeinsamen Kreisbahn um eine Zentrumsachse der Manschette verlaufen. Bevorzugt weist jede Manschettenhälfte eine (einzelne) Führungsschiene auf, die sich über ein Viertel des Umfangs der Manschette erstreckt. Bevorzugt beginnt die Führungsschiene jeweils bei dem zweiten Verbindungssteg mit der Hakenaufnahme und endet kurz mit einem maximalen Bogen von 90°. Bevorzugt ist der Führungsschacht der Rohranschlussaufnahme so gestaltet, dass zumindest eine der Führungsschienen hineingleiten kann. Der Führungsschacht kann eine Nut sein, die in Innenseiten der Rohranschlussaufnahme eingelassen ist. Die Nut kann dabei eine Tiefe haben, die mindestens einer Höhe der Führungsschiene in radialer Richtung entspricht. Bevorzugt weist der Führungsschacht Öffnungen in Umfangsrichtung auf, die mindestens so lang sind, wie die Führungsschienen in Umfangsrichtung. Die Manschette am Rohrstutzen kann in die Öffnungen gesetzt werden und durch eine Drehung ist es möglich, dass die Führungsschienen in die Führungsschächte eingreifen, um den Bajonettverschluss auszubilden.

Der Bajonettverschluss kann gegen eine (weitere bzw. unerwünschte) Verdrehung in Umfangsrichtung mit Anschlägen gegen Stirnseiten des Führungsschachts begrenzbar bzw. blockierbar sein. Bevorzugt weist die Arretiervorrichtung bzw. der Bajonettverschluss einen Anschlag an dem zweiten Verbindungssteg auf. Der Anschlag an dem zweiten Verbindungssteg kann eine Erhöhung der Führungsschiene in radialer Richtung sein, die ein weiteres Verdrehen der Manschette begrenzt bzw. blockiert.

Ein Anschlag kann ein flexibler Pin sein. Der Pin kann an dem Ende der Führungsschiene an der Manschette bzw. Manschettenhälfte angebracht sein, der nicht mit dem zweiten Verbindungssteg verbunden ist. Bevorzugt ist der Pin ein Anschlag, der flexibel bzw. eindrückbar ist. Es ist möglich, dass der Pin bei einer Verdrehung der Manschette und einem Eingreifen der Führungsschiene in den Führungsschacht eingedrückt wird. Bevorzugt ist der Pin in radialer Richtung höher als die Führungsschiene ausgebildet. Bevorzugt ist der Führungsschacht so ausgestaltet, dass der Pin so weit verdreht wird, dass er bei einer vollständigen Verdrehung der Manschette wieder aus dem Führungsschacht herausragt und so wieder in seine vollständige radiale Ausdehnung zurückspringt. So ist es möglich, dass bei einer vollständigen Verdrehung der Manschette die Führungsschiene in den Führungsschacht eingreift und gegen eine weitere Verdrehung mit dem Anschlag an dem zweiten Verbindungssteg und dem Pin gehalten und eingeklemmt wird.

Die Manschette kann aus einem Kunststoff bestehen und beispielsweise ausgewählt aus folgender Gruppe: POM (Polyoxymethylene), PP (Polypropylene), PC (Polycarbonate), ABS (Acrylnitril-Butadien-Styrol-Copolymer), PTFE (Polytetrafluorethylen).

Der Rohrstutzen kann einen (äußeren) Lagerbereich aufweisen, der sich an einen endseitigen Befestigungs- und Dichtungsbereich des Rohrstutzens anschließt, wobei der Lagerbereich länger als eine axiale Länge der Manschette ist. Als Lagerbereich ist insbesondere ein gerader Abschnitt des Rohrstutzens zu verstehen, an dem die Manschette (zusammengebaut) axial entlang beweglich bzw. verschieblich anordenbar bzw. angeordnet ist.

Der Befestigungs- und Dichtungsbereich kann an einem Ende des Rohrstutzens beginnen. Bevorzugt wird die Manschette an dem Lagerbereich des Rohrstutzens angebracht. Der Befestigungs- und Dichtungsbereich weist bevorzugt einen ersten Außendurchmesser auf, der größer ist als ein zweiter Außendurchmesser des Lagerbereichs. Bevorzugt kann ein Übergang vom Befestigungs- und Dichtungsbereich zum Lagerbereich einen Anschlag für die Manschette darstellen. Der Rohrstutzen kann so gegen ein Verrutschen aus der Rohranschlussaufnahme heraus gesichert sein. Bevorzugt ist die hauptsächliche Aufnahme und Befestigung des Rohrstutzens durch diesen Übergangsbereich, der sich an der Manschette abstützen kann, gewährleistet.

Bevorzugt weist der Rohrstutzen im Befestigungs- und Dichtungsbereich Dichtungsmittel auf, mit denen der Rohrstutzen an der Rohranschlussaufnahme abgedichtet werden kann, sodass der Strömungskanal abgedichtet ist. Bevorzugt weist der Befestigungs- und Dichtungsbereich zur Aufnahme des Dichtungsmittels, insbesondere eines Dichtungsrings, einen Dichtungssitz auf, in dem das Dichtmittel radial und axial gehalten werden kann. Bevorzugt weist die Manschette eine radiale Ausdehnung aus, die der radialen Ausdehnung des Befestigungs- und Dichtungsbereich entspricht.

Die Manschette kann eine zylindrische Manschetteninnenseite aufweisen, mit der die Manschette auf dem Rohrstutzen verschiebbar ist. Die Manschetteninnenseite weist bevorzugt einen ersten Innendurchmesser auf, der dem zweiten Außendurchmesser des Rohrstutzens im Lagerbereich etwa entspricht bzw. etwas größer ist, so dass ein vorgegebenes Spiel vorliegt. Bevorzugt ist die Manschette im Lagerbereich des Rohrstutzens verschiebbar.

Die Erfindung und das technische Umfeld werden nachfolgend anhand von vier Figu-ren näher erläutert. Die Darstellungen sind schematisch und nicht zur Veranschaulichung von Größenverhältnissen vorgesehen. Die mit Bezug auf einzelne Details der Figur angeführten Erläuterungen sind extrahierbar und mit Sachverhalten aus der vorstehenden Beschreibung frei kombinierbar, es sei denn, dass sich für einen Fachmann zwingend etwas anderes ergibt, bzw. eine solche Kombination explizit ausgeschlossen wird. Es zeigen schematisch:
- Fig. 1:: eine Schnittdarstellung eines Heizgeräts mit eingebautem Rohrstutzen in einem Rohranschlussbereich,
- Fig. 2:: eine Explosionszeichnung des Rohrstutzens mit zwei Manschettenhälften einer Manschette,
- Fig. 3:: eine Darstellung des Rohrstutzens mit zusammengebauter Manschette, und
- Fig. 4:: eine Darstellung des Heizgeräts mit eingebautem Rohrstutzen.

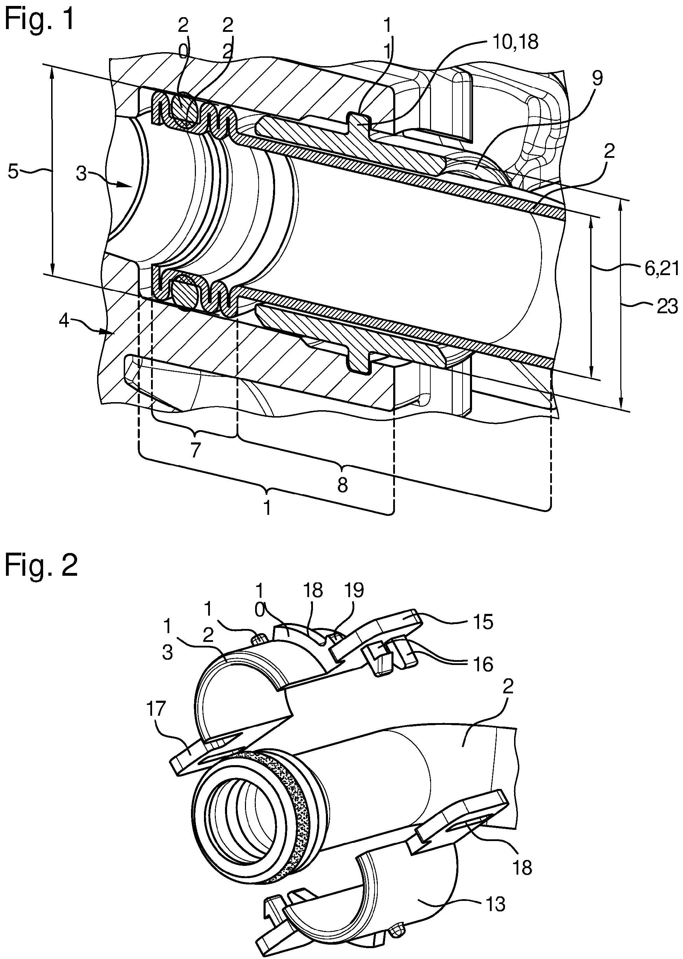

Fig. 1 zeigt eine Schnittdarstellung eines Heizgeräts 4 mit eingebautem Rohrstutzen 2 in einer Rohranschlussaufnahme 1 (ggf. auch als Rohranschlussbereich zu bezeichnen). Der Rohrstutzen 2 und die Rohranschlussaufnahme 1 bilden gemeinsam einen Strömungskanal 3. Der Strömungskanal 3 verläuft von dem Rohrstutzen durch den Rohranschlussbereich in das Heizgerät 4. Der Rohrstutzen 2 ist mit einer Manschette 9 in der Rohranschlussaufnahme 1 befestigt. Die Manschette 9 ist axial gegen ein Verschieben durch einen Eingriff einer Führungsschiene 18 einer Arretiervorrichtung 10 in einen Führungsschacht 11 gesichert. Der Rohrstutzen 2 weist einen Lagerbereich 8 und einen Befestigungs- und Dichtungsbereich 7 auf. Der Befestigungs- und Dichtungsbereich 7 stellt ein Ende des Rohrstutzens 1 dar. Zudem ist im Befestigungs- und Dichtungsbereich 7 ein Dichtungsmittel 20 gehalten. Das Dichtungsmittel 20 ist umlaufend und dichtet den Strömungskanal 3 ab. Das Dichtmittel 20 ist in einem Dichtungssitz 22 axial und radial gesichert und liegt an einer Innenseite des Rohranschlussbereichs 1 an. Der Rohrstutzen 2 weist einen ersten Außendurchmesser 5 im Befestigungs- und Dichtungsbereich 7 auf, der größer ist als ein zweiter Außendurchmesser 6 im Lagerbereich 8. Die Manschette 9 weist einen Manschetteninnendurchmesser 21 auf, der dem zweiten Außendurchmesser 6 entspricht. Weiter weist die Manschette 9 einen Manschettenaußendurchmesser 23 auf, der dem ersten Außendurchmesser 5 entspricht.

Fig. 2 zeigt eine Explosionszeichnung des Rohrstutzens 2 mit zwei Manschettenhälften 13 der Manschette 9. Die Manschettenhälften 13 sind zwei gleiche Bauteile, die jeweils eine Arretiervorrichtung 10 (hier beispielhaft als Oberbegriff für die Führungsschiene, Anschlag, Pin, etc. verwendet), einen ersten Verbindungssteg 15 und einen zweiten Verbindungssteg 17 aufweisen. An den ersten Verbindungssteg 15 schließt sich die Arretiervorrichtung 10 an. Die Arretiervorrichtung 10 weist eine Führungsschiene 18 auf, die mit einem Anschlag 19 an dem ersten Verbindungssteg 15 beginnt und sich entlang einer Umfangslinie auf der Manschettenhälfte erstreckt. Die Arretiervorrichtung 10 endet mit einem Pin 12, der eine Viertelumdrehung entlang der Umfangslinie von dem ersten Verbindungssteg 15 entfernt ist. Die Führungsschiene 18 endet vor dem Pin 12, sodass zwischen Pin 12 und Führungsschiene 18 ein freier Bereich liegt. Die Führungsschiene 18 weist eine konstante Höhe in radialer Richtung auf. Der Anschlag 19 und der Pin 12 weisen Höhen in radialer Richtung auf, die größer sind als die der Führungsschiene 18. Der erste Verbindungssteg 15 weist zwei (entgegengesetzt ausgerichtete) Rastnasen 16 auf, die in Hakenaufnahmen 14 des zweiten Verbindungsstegs 17 einrastbar sind.

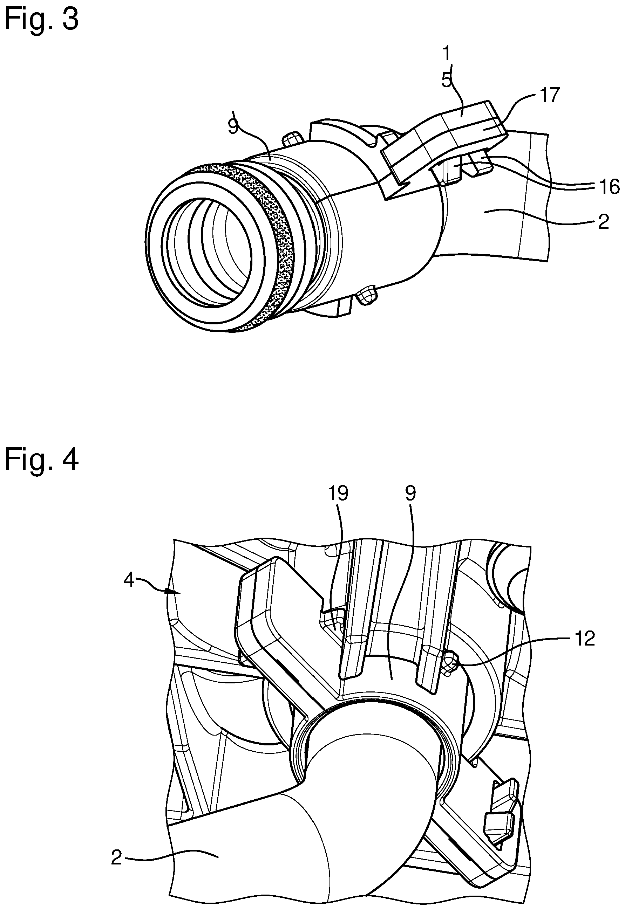

Fig. 3 zeigt eine Darstellung des Rohrstutzens 2 mit zusammengebauter Manschette 9. In der Darstellung ist zu erkennen, wie die Rastnasen 16 des ersten Verbindungsstegs 15 in die Hakenaufnahme 14 des zweiten Verbindungsstegs 17 eingreifen.

Fig. 4 zeigt eine Darstellung des Heizgeräts 4 mit eingebautem Rohrstutzen 2. Es ist zu erkennen, wie die (hier teilweise verdeckte) Arretiervorrichtung 10 der Manschette 9 in den (hier verdeckten) Führungsschacht 11 des Rohranschlussbereichs 1 eingreift. Die Manschette 9 ist dabei gegen ein Verdrehen zwischen dem Anschlag 19 und dem Pin 12 gesichert.

### Bezugszeichenliste

- 1: Rohranschlussaufnahme
- 2: Rohrstutzen
- 3: Strömungskanal
- 4: Heizgerät
- 5: erster Außendurchmesser
- 6: zweiter Außendurchmesser
- 7: Befestigungs- und Dichtungsbereich
- 8: Lagerbereich
- 9: Manschette
- 10: Arretiervorrichtung
- 11: Führungsschacht
- 12: Pin
- 13: Manschettenhälfte
- 14: Hakenaufnahme
- 15: erster Verbindungssteg
- 16: Rastnase
- 17: zweiter Verbindungssteg
- 18: Führungsschiene
- 19: Anschlag
- 20: Dichtmittel
- 21: Manschetteninnendurchmesser
- 22: Dichtungssitz
- 23: Manschettenaußendurchmesser

## Patentansprüche

1. Heizgerät (4) mit einem Rohrstutzen (2), einer Rohranschlussaufnahme (1), eingerichtet zur Aufnahme und Befestigung des Rohrstutzens (2), sowie einer Manschette (9), wobei die Manschette (9) drehbar auf dem Rohrstutzen (2) angeordnet und eingerichtet ist zur Ausbildung eines Bajonettverschlusses mit dem Heizgerät (4), wobei die Manschette (9) zwei zusammensetzbare Manschettenhälften (13) umfasst, die miteinander eine verclipbare Verbindung ausbilden.

2. Heizgerät (4) nach einem der vorherigen Ansprüche, wobei die Manschettenhälften (13) jeweils gleich ausgestaltet sind.

3. Heizgerät (4) nach einem der vorherigen Ansprüche, wobei die Manschette (9) eine in Umfangsrichtung verlaufende Führungsschiene (18) aufweist, die in Eingriff mit einem Führungsschacht (11) an der Rohranschlussaufnahme (1) zur Ausbildung des Bajonettverschlusses bringbar ist.

4. Heizgerät (4) nach Anspruch 3, wobei der Bajonettverschluss gegen eine Verdrehung in Umfangsrichtung mit Anschlägen (12, 19) gegen Stirnseiten des Führungsschachts (11) begrenzbar ist.

5. Heizgerät (4) nach einem der Ansprüche 3 oder 4, wobei ein Anschlag ein flexibler Pin (19) ist.

6. Heizgerät (4) nach einem der vorherigen Ansprüche, wobei die Manschette (9) aus Kunststoff besteht.

7. Heizgerät (4) nach einem der vorherigen Ansprüche, wobei der Rohrstutzen (2) einen Lagerbereich (8) aufweist, der sich an einen endseitigen Befestigungs- und Dichtungsbereich (7) anschließt, wobei der Lagerbereich (8) länger als eine axiale Länge der Manschette (9) ist.

8. Heizgerät (4) nach einem der vorherigen Ansprüche, wobei die Manschette (9) eine glatte zylindrische Manschetteninnenseite aufweist, mit der die Manschette (9) auf dem Rohrstutzen (2) verschiebbar ist.
